# EUROPÄISCHE PATENTSCHRIFT

(11) **EP 3 351 914 B1**
(45) Veröffentlichungstag und Bekanntmachung des Hinweises auf die Patenterteilung: **04.08.2021**
(21) Anmeldenummer: 18151396.1
(22) Anmeldetag: 12.01.2018
(51) Int. Cl.: G01K 11/18, G01K 11/3206, G08C 23/06, H04Q 9/00, G02F 1/225

(54) **SENSORLEITUNG, MESSANORDNUNG SOWIE VERFAHREN ZUR ERFASSUNG EINER UMGEBUNGSVARIABLEN**
SENSOR LINE, MEASUREMENT ASSEMBLY AND METHOD FOR DETECTING AN AMBIENT VARIABLE
LIGNE DE DÉTECTION, DISPOSITIF DE MESURE AINSI QUE PROCÉDÉ DE DÉTECTION DE VARIABLES D'ENVIRONNEMENT

(30) Priorität: 18.01.2017 DE 102017200755
(43) Veröffentlichungstag der Anmeldung: 25.07.2018
(73) Patentinhaber: LEONI Kabel GmbH, 91154 Roth (DE)
(72) Erfinder: GOß, Sebastian, 91154 Roth (DE); INTELMAN, Sergey, 90439 Nürnberg (DE)
(74) Vertreter: FDST Patentanwälte

(56) Entgegenhaltungen:
- WO-A1-2016/169702
- JP-A- H0 968 469
- US-A- 4 462 699
- US-A1- 2015 316 424

## Beschreibung

Die Erfindung betrifft eine Sensorleitung zur Erfassung einer Umgebungsvariablen. Die Erfindung betrifft weiterhin eine Messanordnung mit einer derartigen Sensorleitung, sowie ein Verfahren zur Erfassung der Umgebungsvariablen.

Die Erfassung einer Umgebungsvariablen, vor allem die Erfassung der Temperatur, ist in der Technik weit verbreitet, beispielsweise zur Überwachung von Maschinen oder auch zur Überwachung von elektrischen Kabeln. Teilweise werden hierzu spezielle Sensorkabel eingesetzt.

Zur Temperaturüberwachung kann beispielsweise der temperaturabhängige Widerstand eines elektrischen Leiters ausgenutzt werden. Ein entsprechend ausgebildetes Sensorkabel nutzt also aus, dass sich der elektrische Widerstand mit der Temperaturänderung verändert und somit ein veränderter Strom an dem Sensorkabel gemessen wird. Diese Variante der Erfassung der Temperatur bezieht sich allerdings ausschließlich auf eine Temperaturänderung über die Gesamtlänge des Sensorkabels. Eine Erfassung einer lokal auftretenden Temperaturänderung (sog. "Hot-Spot") ist mit dieser Messanordnung kaum möglich, da eine lokale Änderung des Widerstandes bezogen auf die Gesamtlänge der Sensorleitung und damit auch des Widerstandes lediglich eine kleine Stromänderung zur Folge hat, die keine eindeutige Aussage zulässt und / oder nur mit aufwändigen und teuren Strommessgeräten erfassbar ist.

Aus der DE 10 2013 227 051 A1 ist eine Messanordnung zur Erfassung einer Temperaturänderung mithilfe eines Sensorkabels zu entnehmen. Diese Messanordnung umfasst ein Sensorkabel mit einem ersten Signalleiter und eine Einspeiseeinheit, welche im Betrieb ein Messsignal in den Signalleiter einspeist. Das Messsignal wird symmetrisch in zwei Signalleiter eingespeist. Mithilfe einer Auswerteeinheit wird das eingespeiste Messsignal ausgewertet. Der erste Signalleiter ist von einer Isolierung als Dieelektrikum mit einer ersten temperaturabhängigen Dielektrizitätszahl umgeben. Zur Erfassung einer Temperaturänderung wird unter anderem ausgenutzt, dass Signallaufzeiten in Leitern, welche mit einer Isolierung aus einem temperaturabhängigen Dieelektrikum versehen sind, aufgrund einer Temperaturänderung variieren. Die Signallaufzeiten für gegebene Kabellängen bei Raumtemperatur liegen als Referenzlaufzeiten vor. Daher kann eine Temperaturänderung festgestellt und analysiert werden. Mit dieser Messanordnung können auch "Hot-Spots" erfasst werden, da dies zu einer lokalen Änderung der Dielektrizitätszahl und damit zu einer lokalen Störstelle führt, an der des Signal zumindest zum Teil reflektiert wird, wodurch eine veränderte Signallaufzeit erhalten wird.

Das aus der DE 10 2013 227 051 A1 zu entnehmende Sensorkabel und die Messanordnung sind aufgrund der Bauweise und Auswertung der Messsignale komplex und kostenintensiv.

Der US 4 462 699 A ist ein Wandler zur Erfassung einer Temperatur zu entnehmen, der einen Koppler aufweist, in dem zwei Lichtwellenleiter angeordnet sind. Zwischen den Lichtwellenleitern ist eine Substanz, vorzugsweise ein Öl eingebracht, das in Abhängigkeit der Temperatur seine Transparenz ändert und somit einen Lichtaustausch zwischen den beiden Lichtwellenleitern ermöglicht.

Die JP H09 68469 A beschreibt einen Temperatursensor mit einem in Teilbereiche unterteilten Lichtwellenleiter, bei dem in Abhängigkeit der Temperatur Licht von einem Teilbereich in den nächsten Teilbereich eingekoppelt wird, welches anschließend von einer Messanordnung erfasst wird.

Ausgehend hiervon liegt der Erfindung die Aufgabe zugrunde, eine Sensorleitung, eine Messanordnung und ein Verfahren anzugeben, mit deren Hilfe eine Veränderung einer Umgebungsvariablen, vorzugsweise die Temperatur, einfach erfasst werden kann.

Die auf die Sensorleitung gerichtete Aufgabe wird erfindungsgemäß gelöst durch eine Sensorleitung zur Erfassung der Veränderung einer Umgebungsvariablen. Die Sensorleitung weist einen äußeren Schutzmantel auf, in dem ein erster und ein zweiter Lichtwellenleiter sowie ein Material mit einer Lichtdurchlässigkeit, die in Abhängigkeit des Werts der Umgebungsvariablen variiert, angeordnet sind. Das Material ist dabei derart zwischen dem ersten Lichtwellenleiter und dem zweiten Lichtwellenleiter positioniert, dass es in Abhängigkeit des Wertes der Umgebungsvariablen die Einkopplung des Lichts aus dem ersten Lichtwellenleiter in den zweiten Lichtwellenleiter ermöglicht. Die Einkopplung erfolgt dabei in radialer Richtung, d.h. quer zur Längserstreckung der Sensorleitung und der Lichtwellenleiter. Die beiden Lichtwellenleiter erstrecken sich dabei über die gesamte Länge der Sensorleitung.

Die Erfassung der Änderung der Umgebungsvariablen beruht hierbei auf einer optischen Messung mit zwei Lichtwellenleitern und nutzt die spezielle Eigenschaft des Materials aus, das seine Transparenz bei einer Änderung des Werts der Umgebungsvariablen ändert. Durch die erhöhte Transparenz gelangt Licht aus dem ersten in den zweiten Lichtwellenleiter und kann entsprechend ausgewertet werden. Hierbei ist insbesondere keine aufwändige Signalverarbeitung erforderlich, da beispielsweise lediglich überprüft werden muss, ob sich Licht im zweiten Lichtwellenleiter ausbreitet.

Der erste Lichtwellenleiter ist dabei allgemein derart ausgebildet, dass ein radiales Austreten von Licht ermöglicht ist, so dass dieses austretende Licht in den zweiten Lichtwellenleiter eintreten kann. Der erste Lichtwellenleiter umfasst daher insbesondere eine optische Faser, aus der das Licht seitlich austreten kann. Diese Faser wird nachfolgend auch als Seitenlichtfaser bezeichnet.

Der zweite Lichtwellenleiter weist vorzugsweise ebenfalls eine optische Faser auf, die als "Kollektorfaser" bezeichnet wird, da sie das aus der Seitenlichtfaser austretende Licht einfängt. Die Kollektorfaser ist dabei vorzugsweise ebenfalls als eine Seitenlichtfaser ausgebildet.

Die Sensorleitung ermöglicht eine vereinfachte Detektion einer Änderung der Umgebungsvariablen. Ein besonderer Vorteil dieser Sensorleitung ist darin zu sehen, dass auch eine nur lokal auftretende Veränderung der Umgebungsvariablen zuverlässig erfasst werden kann.

Das Material ist vorzugshafterweise dahingehend ausgebildet, dass sich seine Transparenz sprunghaft ändert. Unter sprunghaft wird hierbei insbesondere verstanden, dass beispielsweise bei Erreichen und Überschreiten eines definierten Umschlagwertes für die Umgebungsvariable eine deutliche Veränderung der Transparenz, also der Lichtdurchlässigkeit, erfolgt. Unter deutliche Veränderung wird beispielsweise eine Veränderung der Transparenz um zumindest 30%, speziell von zumindest 50% und vorzugsweise von zumindest 75% verstanden (bei einem Transparenzbereich von 0% (vollständig opak) bis 100% (vollständig transparent). Mit der sprunghaften Änderung der Transparenz erfolgt auch eine sprunghafte Einkopplung des Lichts von dem ersten Lichtwellenleiter in den zweiten Lichtwellenleiter und führt damit auch zu einem sprunghaften Anstieg des sich im zweiten Lichtwellenleiter ausbreitenden Lichts. Die Intensität des sich im zweiten Lichtwellenleiter ausbreitenden Lichts steigt beispielsweise auf das zumindest 1,5-fache, vorzugsweise auf das zumindest 2-fache oder 3-fache an. Ein Vorteil ist dahingehend zu sehen, dass diese sprunghafte Änderung einen binären Charakter aufweist, welcher einfach zu detektieren ist.

Bevorzugt ist die Sensorleitung zur thermischen Überwachung ausgebildet. Die Transparenz des Materials ist daher vorzugsweise temperaturabhängig. Insbesondere ändert sich bei Überschreiten eines bestimmten Temperaturwerts, der sogenannten "Umschlagstemperatur", die Transparenz des Materials und ermöglicht eine sprunghafte radiale Einkopplung des Lichts des ersten Lichtwellenleiters in den zweiten Lichtwellenleiter. Diese temperaturabhängige Transparenzänderung des Materials bietet den Vorteil, dass eine einfache und störunanfällige Messbedingung geschaffen ist. Da die Transparenzänderung auch an lokalen Stellen der Seitenlichtfaser stattfindet, ist mit der beschriebenen Sensorleitung eine Erfassung von lokalen Erwärmungen (sogenannten "Hot-Spot") möglich.

Bevorzugt weist das Material einen transparenten, thermoplastischen Kunststoff auf, in den thermochromatische Pigmente eingebracht sind. Die thermochromatischen Pigmente bestimmen dabei die Transparenz des Materials. Sie verändern ihre Transparenz in Abhängigkeit der Temperatur. Bevorzugt erfolgt dies bei einer definierten Umschlagstemperatur. Derartige thermochromatische Pigmente sind grundsätzlich kommerziell erhältlich. Über die Wahl der Pigmente wird eine gewünschte Umschlagstemperatur des Materials eingestellt. Der besondere Vorteil der thermochromatischen Pigmente liegt darin, dass deren Umschlagstemperatur handelsüblich beispielsweise in 2°C Schritten (z.B. 58°C, 60°C, 62°C, usw.) gestaffelt ist. Somit lässt dich der Sensorleiter sehr genau auf sein Einsatzumfeld anpassen.

Die Umschlagstemperatur des Materials ist allgemein vorzugsweise auf einen Wert zwischen 40°C und 90°C, insbesondere auf einen Wert zwischen 50°C und 70°C eingestellt. Da die Sensorleitung vorzugsweise zur thermischen Überwachung eingesetzt ist, bietet dieser beispielhaft gewählte Temperaturbereich nicht nur einen technischen Überhitzungsschutz, sondern auch eine thermische Berührungssicherheit für den Endnutzer.

Die Konzentration der thermochromatischen Pigmente, bezogen auf die Gesamtmasse des Materials liegt vorzugsweise zwischen 1 Gew.-% und 10 Gew.-%, insbesondere zwischen 2 Gew.-% und 6 Gew.-%.

In bevorzugter Weiterbildung weist eine derartige Sensorleitung eine gemeinsame Ummantelung auf, die den ersten Lichtwellenleiter und den zweiten Lichtwellenleiter umgibt und die reflektierend ausgebildet ist. Der Vorteil einer solchen Ausgestaltung der Sensorleitung liegt darin, dass das radial abgestrahlte Licht des ersten Lichtwellenleiters, welches nicht direkt in den zweiten Lichtwellenleiter eingekoppelt wird, an dieser Ummantelung zurück in den zweiten Lichtwellenleiter reflektiert wird und somit die Messempfindlichkeit derselbigen erhöht.

Um einen hohen Reflexionsgrad (Verhältnis von reflektierter zu einfallender Intensität) des von der Seitenlichtfaser radial abgestrahlten Lichts zu erzielen, ist die gemeinsame Ummantelung vorzugsweise als Metallfolie ausgebildet. Hierunter wird eine reine Metallfolie als auch eine metallkaschierte Kunststofffolie verstanden. Metalle weisen häufig Reflexionsgrade von beispielsweise über 90% auf.

In zweckdienlicher Weiterbildung weist zumindest der erste Lichtwellenleiter vorzugsweise einen extrudierten Mantel aus dem Material auf. Der Lichtwellenleiter mit dem Mantel wird dabei vorzugsweise durch eine herkömmliche Mantelextrusion gefertigt. Es werden daher Standard-Verfahren für eine kostengünstige Fertigung herangezogen.

Insbesondere um eine verbesserte Störresistenz zu erreichen, weist der zweite Lichtwellenleiter gemäß einer bevorzugten Weiterbildung einen Mantel aus dem Material auf. Durch diese Weiterbildung ist eine Einkopplung von Licht in den zweiten Lichtwellenleiter nur dann möglich, wenn die Umschlagstemperatur erreicht oder überschritten ist.

Bei diesen Ausführungsvarianten mit dem Mantel aus dem Material weisen die Lichtwellenleiter jeweils vorzugsweise eine zumindest über Teile des Umfangs oder vollständig claddingfreie optische Faser auf, so dass die Reflexion innerhalb des Lichtwellenleiters durch den Mantel und dessen Transparenz bestimmt ist.

Bei der optischen Faser handelt es sich vorzugsweise um eine polymere optische Faser (POF) oder alternativ um eine Glasfaser.

Gemäß einer bevorzugten Ausgestaltung sind die beiden Lichtwellenleiter miteinander verdrillt. Dies ist insbesondere bei der Ausgestaltung mit den von dem Material umgebenen Fasern von Vorteil. Dadurch werden die beiden Lichtwellenleiter definiert aneinander gehalten, so dass eine zuverlässige Einkopplung in die Kollektorfaser erfolgt. Zudem kann auf herkömmliche Fertigungsverfahren zurückgegriffen werden.

Vorzugsweise ist wenigstens einer der Lichtwellenleiter, bevorzugt zumindest der erste und insbesondere sind beide Lichtwellenleiter derart ausgestaltet, dass die optische Faser des jeweiligen Lichtwellenleiters für eine möglichst gute Lichtleitung in Faserlängsrichtung ein Cladding aufweist, wobei lediglich ein Teil der Faser frei von Cladding ist. Das Material grenzt dabei an den Teil an, welcher frei von Cladding ist. Der Vorteil dieser Weiterbildung ist die Verwendung von standardmäßigen optischen Fasern, welche eine Kosteneinsparung bei gleichzeitig sehr guter Lichtwellenleitung aufweisen. Durch den claddingfreien Teil wird die Einkopplung von Licht in die Kollektorfaser und somit die Funktionsweise der Sensorleitung gewährleistet.

In ergänzender Weiterbildung sind die beiden Lichtwellenleiter in das Material eingebettet. Hierdurch lässt sich der Fertigungsaufwand verringern. Beispielsweise werden der erste Lichtwellenleiter und der zweite Lichtwellenleiter in einem gemeinsamen Fertigungsschritt von dem Material, insbesondere im Rahmen einer Extrusion, umgeben.

Die Sensorleitung weist einen äußeren Schutzmantel auf. Die Sensorleitung kann damit auch in Bereichen eingesetzt werden, wo sie Umwelteinflüssen, speziell widrigen Umgebungsbedingungen, ausgesetzt ist.

Eine derartige Sensorleitung ist vorzugsweise in einem zu überwachenden Kabel angebracht. Aufgrund der Ausgestaltung der Sensorleitung ist diese insbesondere als zusätzliche "Ader" in ein Kabel integriert. Sie bietet somit die Möglichkeit, der Überwachung des Kabels selbst.

Gemäß einer besonders bevorzugten Ausgestaltung ist die Sensorleitung Teil eines Ladekabels, vorzugsweise für Kraftfahrzeuge. Unter Ladekabel wird hierbei insbesondere ein Kabel verstanden, welches zur Übertragung von Strömen im Bereich von zumindest 16A, insbesondere von zumindest 50A oder zumindest 100A und beispielsweise bis zu 600A ausgelegt ist. Bevorzugt ist das Kabel zur Übertragung von Strömen im Bereich zwischen 300A und 500A ausgelegt. Derartige Ladeströme treten beispielsweise bei sogenannten (DC-) Superchargern auf.

Durch die hohen Ströme beim Ladevorgang erwärmt sich das Kabel. Durch eine Temperaturüberwachung wird sichergestellt, dass eine bestimmte Temperatur nicht überschritten wird. Hierdurch wird insbesondere ein thermischer Berührungsschutz erreicht.

Ein derartiges Ladekabel weist insbesondere an zumindest einem Ende einen Ladestecker zur Verbindung mit einem Gegenstecker an einer Ladestation oder an einem Kraftfahrzeug auf. Ladekabel für Elektro- oder Hybridfahrzeuge mit elektrischen Fahrmotoren weisen üblicherweise genormte Ladestecker auf. Relevante Normen hierzu sind gegenwärtig IEC 62196 -1 (Typ 2- Stecker), SAE J1772 bzw. IEC 62196-2 (Typ 1-Stecker). Das Ladekabel ist daher zumindest an einem Ende mit einem genormten Ladestecker beispielsweise gemäß vorgenannter oder (zukünftiger) vergleichbarer Normen versehen.

Die Temperaturüberwachung von Ladekabeln für Kraftfahrzeuge gewinnt allgemein insbesondere für Ladevorgänge mit Gleichstrom (DC) zunehmend an Bedeutung. Diese Ladevorgänge weisen eine Zielstromstärke von 500A auf. Zum einen steigt mit höheren Strömen die thermische Belastung und somit die technische Beanspruchung der Adern, zum anderen muss ein thermischer Berührungsschutz gegenüber dem Endnutzer vorzugsweise dahingehend gewährleistet sein, dass der Endnutzer das Kabel zu jedem Zeitpunkt berühren kann, ohne einen körperlichen Schaden dadurch zu erlangen.

Durch die bevorzugte Variante mit der definierten Umschlagstemperatur wird daher neben der Möglichkeit der thermischen Überwachung insbesondere der Vorteil eines thermischen Berührungsschutzes für den Endnutzer ausgebildet.

Die Aufgabe wird erfindungsgemäß weiterhin gelöst durch eine Messanordnung sowie ein Verfahren zur Erfassung einer Umgebungsvariablen.

Die Messanordnung weist dabei auf
- die zuvor beschriebene Sensorleitung,
- eine Einspeiseeinheit zur Einspeisung von Licht in den ersten Lichtwellenleiter,
- eine Empfangseinheit zum Empfang von Licht aus dem zweiten Lichtwellenleiter und
- eine Auswerteeinheit, die zur Auswertung des von der Empfangseinheit empfangenen Lichts ausgebildet ist und in Abhängigkeit der empfangenen Intensität ein Signal ausgibt.

Die Einspeiseeinheit weist dabei beispielsweise eine Lichtdiode (LED) zur Einspeisung des Lichts in den ersten Lichtwellenleiter auf.

Die Empfangsseite ist vorzugsweise derart ausgestaltet, dass sie Photodioden zum Empfang des Lichts, welches von dem ersten Lichtwellenleiter in den zweiten Lichtwellenleiter eingekoppelt wird, aufweist.

Die Einspeiseeinheit der Messanordnung ist gemäß einer ersten Variante derart gewählt, dass die Einspeisung des Lichts nur an einem Ende des Lichtwellenleiters erfolgt.

Für eine höhere Lichtintensität innerhalb der Seitenlichtfaser ist die Einspeiseeinheit gemäß einer zweiten Variante bevorzugt derart ausgebildet, dass die Einspeisung des Lichts an beiden Enden des ersten Lichtwellenleiters erfolgt. Der besondere Vorteil einer beidseitigen Einspeisung ist die Realisierung einer konstanteren und größeren eingespeisten Lichtmenge. Bei Überschreiten der Umschlagstemperatur und somit eines Transparenzwechsels des Materials, erfolgt eine deutlichere Einkopplung des Lichts in die Kollektorfaser.

Gemäß einer zweckdienlichen Ausgestaltung ist insbesondere ergänzend auch die Empfangseinheit beiderdseitig an den zweiten Lichtwellenleiter angeschlossen, d.h. an beiden Enden des Lichtwellenleiters wird das austretende Licht empfangen. Diese Ausgestaltung hat den Vorteil, dass die Empfangsempfindlichkeit für das von dem ersten Lichtwellenleiter in den zweiten Lichtwellenleiter eingekoppelte Licht erhöht wird.

In bevorzugter Ausgestaltung ist die Messanordnung zur Detektion der Position einer lokalen Störstelle, insbesondere eines sogenannten Hot Spots ausgebildet. Dabei erfolgt lediglich an der lokalen Störstelle beispielsweise durch Überschreiten der Umschlagstemperatur eine Einkopplung von Licht von dem ersten Lichtwellenleiter in den zweiten Lichtwellenleiter.

Zur Detektion der Position greift die Auswerteeinheit hierbei vorzugsweise auf hinterlegte und / oder berechnete ortsabhängige Intensitätsverläufe zurück. Dies beruht auf der Überlegung, dass aufgrund einer Dämpfung des Lichts in dem jeweiligen Lichtwellenleiter - speziell bei einer nur einseitigen Einkopplung von Licht - für jede Position ein definierter Intensitätswert zu erwarten ist. In Abhängigkeit der Position der Störstelle wird daher eine definierter Bruchteil dieses definierten Intensitätswertes in den zweiten Lichtwellenleiter eingekoppelt. Dieser Bruchteil des definierten Intensitätswerts wird schließlich innerhalb des zweiten Lichtwellenleiters auf der Wegstrecke zur Empfangseinheit wiederum definiert und weglängenabhängig gedämpft. Aus der empfangenen Intensität - bei bekannter eingespeister Intensität, bekannter Dämpfung und bekannter Kopplung zwischen den beiden Lichtwellenleitern - kann daher auf die Position der Störstelle zurückgeschlossen werden.

Alternativ oder ergänzend ist für eine genaue Detektion ist vorzugsweise ein beidseitiger Empfang von Licht im zweiten Lichtwellenleiter vorgesehen. Aus den an den beiden Enden empfangenen Intensitäten wird dann auf die Position der lokalen Störstelle zurückgeschlossen. Insbesondere gibt das Verhältnis der Intensitäten ein Maß für die Position der lokalen Störstelle an. Dies beruht wiederum auf die Ausnutzung der Dämpfung. Erfolgt die Lichteinkopplung (also die Störstelle) in den zweiten Lichtwellenleiter exakt in der Mitte des Lichtwellenleiters, so erfährt das Licht in beide Richtungen die gleiche Dämpfung. Verschiebt sich die Störstelle zu einem Ende, erhöht sich dort die empfangene Intensität. Zur Bestimmung der Position der Störstelle wird wiederum auf einen mathematischen Algorithmus oder beispielsweise in Form einer Tabelle hinterlegte Kennwerte zurückgegriffen.

In zweckdienlicher Ergänzung ist die Auswerteeinheit derart ausgebildet, dass sie bei Überschreitung eines vordefinierten Grenzwertes der empfangenen Intensität ein Signal ausgibt, das zur weiteren Verarbeitung dient.

In bevorzugter Weiterbildung ist die Messanordnung derart ausgebildet, dass sie eine Steuerungsvorrichtung aufweist, die derart ausgelegt ist, dass ein Ladestrom und / oder eine Kühlleistung in Abhängigkeit des Signals gesteuert wird. Diese Weiterbildung betrifft insbesondere das Gebiet der E-Mobilität beim Laden von elektrisch angetriebenen Fahrzeugen. Durch die Steuerung und insbesondere Regelung des Ladestroms wird ein möglichst hoher Ladestrom bei Berücksichtigung eines thermischen Berührungsschutzes und / oder eines Überlastschutzes gewährleistet. Alternativ oder ergänzend wird bei temperierten Ladekabeln die Kühlleistung geregelt. Hierdurch kann der Ladestrom konstant gehalten werden. Derartige temperierte Kabel weisen insbesondere eine interne Kühlung auf. Hierzu ist typischerweise in dem Kabel zumindest ein Strömungskanal integriert, der im Betrieb von einem Kühlmedium durchströmt wird. Das Kühlmedium wird beispielsweise im Kreislauf geführt. Am Kabelende ist das Kabel mit einer Kühlmediumversorgung verbunden. Über diese Kühlmediumversorgung wird die Kühlleistung gesteuert, beispielsweise durch die Steuerung der Temperatur und / oder der Durchflussmenge des Kühlmediums.

Speziell ist die Umschlagstemperatur des Materials als vordefinierter Grenzwert zur Signalausgabe gewählt. Dadurch ist eine Regelung dahingehend realisiert, dass die als Folge des fließenden Ladestroms resultierende Temperaturbelastung des Ladekabels nicht zu groß wird und einen definierten Wert nicht überschreitet. Diese Regelung erfolgt durch einen Soll-Ist-Wert Vergleich innerhalb eines Regelkreises. Die Regelgröße ist die Temperatur. Dies dient dazu, das Ladekabel vor thermischer Beschädigung zu schützen und im Rahmen der Endnutzersicherheit zu gewährleisten, dass für den Endnutzer keine Gefahr für Verbrennungen beim Berühren des Kabels besteht.

Die im Hinblick auf die Sensorleitung aufgeführten Vorteile und bevorzugten Ausgestaltungen sind sinngemäß auf die Messanordnung sowie das Verfahren zu übertragen und umgekehrt.

Ausführungsbeispiele der Erfindung werden nachfolgend anhand der Figuren näher erläutert. Diese zeigen teilweise in stark vereinfachten Darstellungen:
- Fig.1: eine Querschnittsdarstellung der Sensorleitung gemäß einer ersten Variante,
- Fig.2: eine Querschnittsdarstellung der Sensorleitung gemäß einer zweiten Variante,
- Fig.3A-C: eine vereinfachte Darstellung der Sensorleitung einer dritten Variante in vereinfachten Prinzipdarstellungen zur Erklärung der Einkopplung des Lichts aus dem ersten Lichtwellenleiter in den zweiten Lichtwellenleiter,
- Fig.4A: eine vereinfachte schaltungstechnische Darstellung einer Messanordnung,
- Fig.4B: die Darstellung ähnlich Fig. 4A ergänzt um Intensitätsverläufe zur Illustration der Lokalisierung eines hot spots,
- Fig.5: eine grob vereinfachte Darstellung eines Ladesystems zum Laden eines Kraftfahrzeuges, sowie
- Fig.6: eine Darstellung des Verlaufs des in den zweiten Lichtwellenleiter eingekoppelten Lichts in Abhängigkeit einer Temperaturbelastung.

In den Figuren sind gleichwirkende Teile mit den gleichen Bezugszeichen dargestellt.

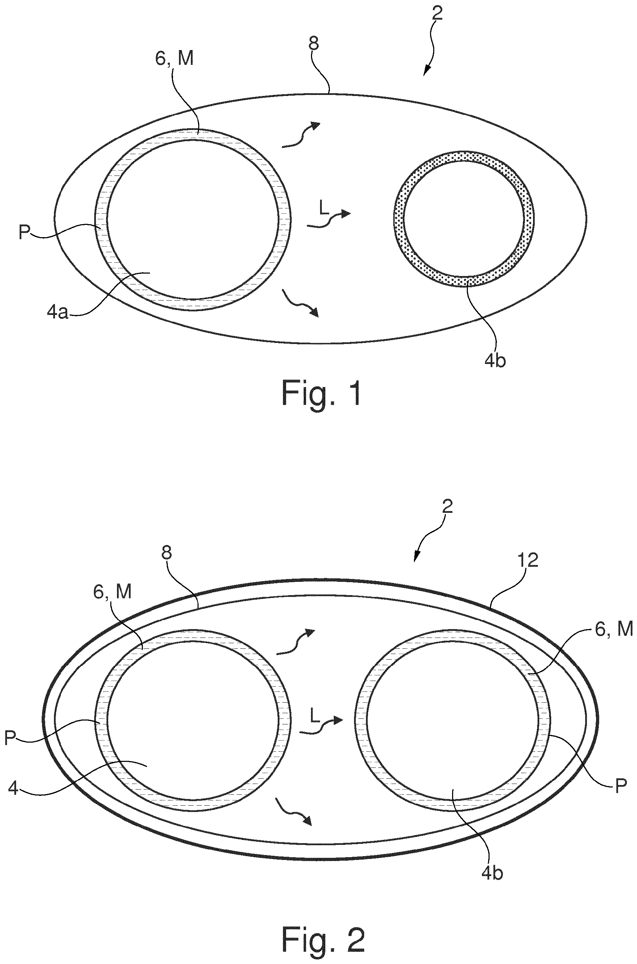

Gemäß Fig.1 weist eine Sensorleitung 2 zur Erfassung einer Umgebungsvariablen einen ersten Lichtwellenleiter 4a sowie einen zweiten Lichtwellenleiter 4b auf. Der erste Lichtwellenleiter 4a weist einen Mantel 6 aus einem Material M auf, welches in Abhängigkeit des Werts einer Umgebungsvariablen seine Transparenz ändert. Der erste Lichtwellenleiter 4a ist vorzugsweise als eine optische Faser, insbesondere als eine sogenannte Seitenlichtfaser realisiert, sodass eine radiale Abstrahlung des in den ersten Lichtwellenleiter 4a eingespeisten Lichts L erfolgen kann. Durch den Mantel 6 erfolgt an der Grenzschicht zwischen der Seitenlichtfaser und dem Mantel eine Reflexion des Lichts, so dass dieses sich in Längsrichtung des Lichtwellenleiters 4a ausbreiten kann, solange der Mantel nicht transparent ist.

Der zweite Lichtwellenleiter 4b ist vorzugsweise ebenfalls als optische Faser ausgebildet. Sie ist dabei derart ausgestaltet, dass radial von außen Licht L eindringen kann.

Bei den Fasern handelt es sich insbesondere um Polymerfasern (POF). Sie sind beispielsweise als handelsübliche PU Fasern ausgebildet.

Die beiden Lichtwellenleiter 4a, 4b sind weiterhin von einer gemeinsamen Ummantelung 8 umgeben welche in Richtung zu den Lichtwellenleitern 4a, 4b reflektierend ausgebildet ist. Vorzugsweise ist die Ummantelung 8 selbst als Metallfolie ausgebildet oder weist an ihrer Innenseite eine Metallschicht auf. Bevorzugt weist die Ummantelung 8 einen Reflexionsgrad von bis zu mehr als 90% für aus dem ersten Lichtwellenleiter 4a austretendes Licht L auf.

Die Sensorleitung wird vorzugsweise zur Überwachung der Temperatur, insbesondere eines Kabels eingesetzt. Die Umgebungsvariable ist die Temperatur. Bei Überschreiten eines vordefinierten Temperaturwerts (der sogenannten "Umschlagstemperatur") ändert das Material M seine Transparenz von undurchsichtig in durchsichtig. Hierdurch ist eine Einkopplung des Lichts aus dem ersten Lichtwellenleiter 4a in den zweiten Lichtwellenleiter 4b ermöglicht. Die Transparenzänderung wird durch sogenannte thermochromatische Pigmente P ermöglicht, welche bei der Herstellung des Materials M diesem beigemischt werden. Durch die reflektierende Ummantelung 8 wird ein hoher Anteil des Lichts L in den zweiten Lichtwellenleiter 4b eingekoppelt.

Ergänzend ist die Sensorleitung 2 vorzugsweise zur Bestimmung und Lokalisierung von lokal auftretenden Temperaturänderungen (sogenannten "Hot Spots") ausgebildet. Diese "Hot-Spot" Detektion ist aufgrund der thermochromatischen Pigmente P ermöglicht, welche beispielsweise lokal ihre Transparenz ändern können. Analog dazu erfolgt die Einkopplung des Lichts L in den zweiten Lichtwellenleiter 4b insbesondere lokal an dieser transparenten Stelle der Sensorleitung 2.

Bei der Ausgestaltung gemäß Fig. 2 ist auch der zweite Lichtwellenleiter 4b von einem Mantel 6 aus dem Material M umgeben. Die beiden Lichtwellenleiter 4a, 4b sind vorzugsweise identisch ausgebildet, insbesondere als Seitenlichtfaser. Der Vorteil dieser Ausgestaltung ist die verringerte Störanfälligkeit des zweiten Lichtwellenleiters 4b gegen nicht vom ersten Lichtwellenleiter 4a eingekoppeltes Licht L. Aufgrund des Mantels 6 um den zweiten Lichtwellenleiter 4b ist in diesen erst nach Überschreiten der Umschlagstemperatur und der damit verbundenen Transparenzänderung des Materials M eine Einkopplung von Licht L gegeben.

Wie auch bei der Variante der Fig. 1 ist eine gemeinsame Ummantelung 8 angeordnet. Diese ist zusätzlich von einem äußeren Schutzmantel 12 umgeben. Dieser ist erfindungsgemäß bei allen Varianten ausgebildet.

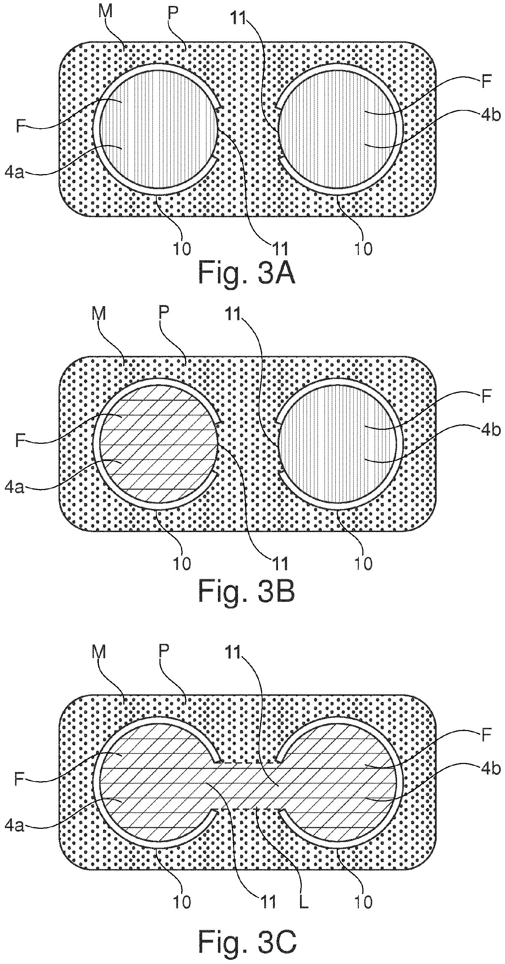

In Fig.3A-C sind die Querschnitte einer dritten Ausgestaltungsvariante zur Erklärung der Einkopplung des Lichts L aus dem ersten Lichtwellenleiter 4a in den zweiten Lichtwellenleiter 4b dargestellt. Diese Variante unterscheidet sich von denen aus Fig.1 und Fig.2 dahingehend, dass der erste Lichtwellenleiter 4a und der zweite Lichtwellenleiter 4b eine optische Faser F, insbesondere eine polymeroptische Faser F und ein Cladding 10 aufweisen, wobei ein Teil 11 der Faser F frei von Cladding 10 ist. Beide Lichtwellenleiter 4a, 4b sind nebeneinander angeordnet. Ergänzend grenzt das dem Material M zumindest an den Teil 11 an, welcher frei von Cladding 10 ist. Bei der bevorzugten Ausgestaltung der Fig. 3A bis 3C sind die beiden Lichtwellenleiter 4a, 4b in dem Material M eingebettet, also jeweils vollständig von diesem umgeben.

Durch das Cladding 10 wird eine möglichst gute Lichtleitung in Längsrichtung des jeweiligen Lichtwellenleiters 4a, 4b gewährleistet. Ein radialer Austritt von Licht L ist durch das Cladding verhindert. Licht L kann daher lediglich in den claddingfreien Teilen 11 austreten. Der claddingfreie Teil 11 erstreckt sich dabei insbesondere lediglich über weniger als die Hälfte des Umfangs und im Ausführungsbeispiel etwa über ein Viertel oder ein Fünftel des Umfangs. In Längsrichtung erstreckt sich der claddingfreie Teil 11 vorzugsweise über die gesamte Länge des jeweiligen Lichtwellenleiters 4a, 4b.

Vorzugsweise sind - wie dargestellt - die beiden claddingfreien Teile 11 der beiden Lichtwellenleiter 4a, 4b aufeinander gerichtet, liegen sich daher gegenüber. Hierdurch ist eine kurze Wegstrecke zur Einkopplung des Lichts L aus dem ersten Lichtwellenleiter 4a in den zweiten Lichtwellenleiter 4b realisiert.

Diese Einkopplung des Lichts L ist schematisch in den drei Abbildungen der Fig.3 dargestellt. Fig.3A zeigt die Sensorleitung 2 im Ruhezustand. Weder der erste Lichtwellenleiter 4a noch der zweite Lichtwellenleiter 4b führt Licht L. In Fig. 3B ist in den ersten Lichtwellenleiter 4a Licht L eingespeist. Der Wert der Temperatur im Bereich der Sensorleitung 2 liegt allerdings unterhalb der Umschlagstemperatur. Das Material M ist in diesem Zustand undurchsichtig und "ersetzt" somit das Cladding 10 an dem claddingfreien Teil 11. Somit erfolgt keine Einkopplung von Licht L vom ersten Lichtwellenleiter 4a in den zweiten Lichtwellenleiter 4b.

Das Verhalten der Sensorleitung bei Überschreiten der Umschlagstemperatur ist in Fig.3C dargestellt. Das Material M ändert bei Überschreiten der Umschlagstemperatur seine Transparenz von undurchsichtig in durchsichtig und ermöglicht eine Einkopplung des Lichts L aus dem ersten Lichtwellenleiter 4a in den zweiten Lichtwellenleiter 4b.

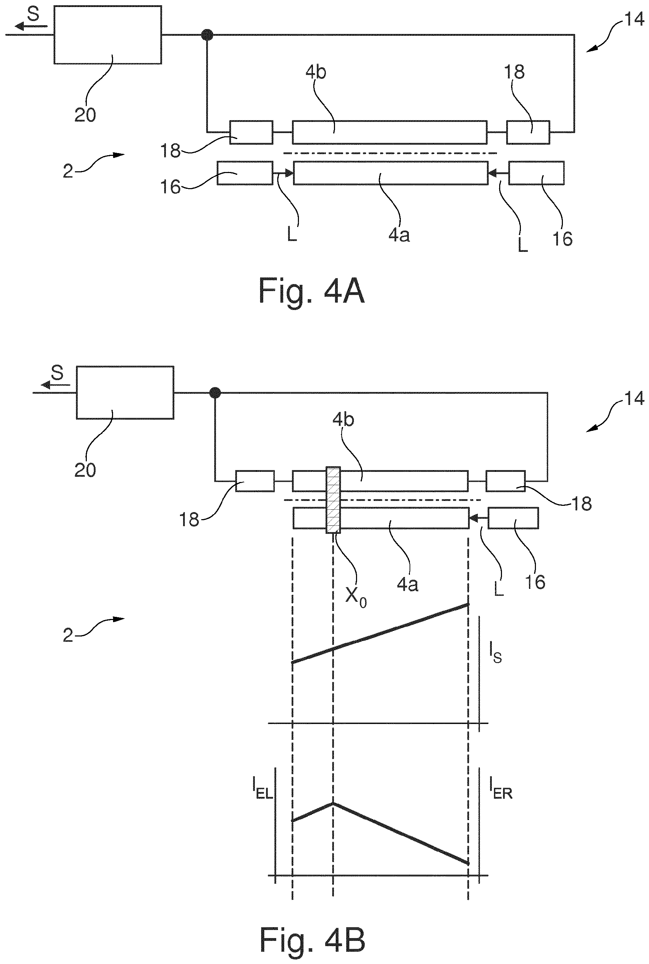

Fig.4A zeigt eine vereinfachte schaltungstechnische Darstellung einer Messanordnung 14. Die Messanordnung weist auf
- eine Einspeiseeinheit 16 zur Einspeisung von Licht L in den ersten Lichtwellenleiter 4a,
- eine Empfangseinheit 18 zum Empfangen des eingekoppelten Lichts aus dem zweiten Lichtwellenleiter 4b sowie
- eine Auswerteeinheit 20 zur Auswertung des von der Empfangseinheit empfangenen Lichts und Ausgabe eines Signals S.

Die Einspeiseeinheit 16 ist derart ausgebildet, dass sie beidendseitig an den ersten Lichtwellenleiter 4a angeschlossen ist, d.h. es erfolgt im Betrieb eine Einspeisung von Licht L an beiden Endseiten des Lichtwellenleiters 4a. Analog dazu ist die Empfangseinheit 18 derart ausgebildet, dass sie beidendseitig an den zweiten Lichtwellenleiter 4b positioniert ist, d.h. Licht L, das an den beiden Enden austritt wird an beiden Enden erfasst. Hierzu ist beispielsweise an beiden Enden jeweils eine Photodiode angeordnet. Der Vorteil dieser Ausgestaltung ist eine Erhöhung der Empfindlichkeit der Sensorleitung 2. Durch die beidendseitige Einspeisung von Licht in den ersten Lichtwellenleiter 4a ist vorzugsweise eine einheitliche Ausleuchtung des ersten Lichtwellenleiters 4a gewährleistet. Dieser beidseitigen Einspeisung des Lichts liegt die Überlegung zugrunde, dass - unabhängig von der Position innerhalb der Sensorleitung 2 - eine möglichst einheitliche Intensität des Lichts L bei der Einkopplung des Lichts L in den zweiten Lichtwellenleiter 4b gewährleistet ist.

Alternativ ist die Messanordnung 14 derart ausgebildet, dass die Einspeiseeinheit 16 einseitig Licht L in den ersten Lichtwellenleiter 4a einspeist und der zweite Lichtwellenleiter 4b beidendseitig die Empfangseinheit 18 aufweist. Eine derartige Ausgestaltung ist in Fig.4B dargestellt.

Ergänzend sin in Fig. 4B noch ein Intensitätsverlauf für die Intensität I_{S} des in den ersten Lichtwellenleiters 4a sowie ein Intensitätsverlauf für die Intensität I_{E} des in den zweiten Lichtwellenleiter 4b eingekoppelten Lichts dargestellt.

Insbesondere mit einer derartigen Messanordnung 14 ist eine Lokalisierung eines Hot Spots X₀ ermöglicht. Lediglich an der Position des Hot Spots X₀ erfolgt eine Lichteinkopplung in den zweiten Lichtwellenleiter 4b.

Infolge der Dämpfung verringert sich die Intensität I_{S} des in den ersten Lichtwellenleiters 4a eingespeisten Lichts kontinuierlich, insbesondere linear, wie dies im oberen Intensitätsverlauf dargestellt ist. Am Ort des Hot Spots X₀ wird ein definierter Anteil der an dieser Position bestehenden Intensität I_{S} in den zweiten Lichtwellenleiter 4b eingekoppelt. Diese eingekoppelte Intensität I_{E} propagiert im zweiten Lichtwellenleiter 4b zu den beiden Enden und wird dabei ebenfalls beispielsweise linear gedämpft. An den beiden gegenüberliegenden Enden werden dann üblicherweise unterschiedliche Intensitäten I_{EL} (linke Seite) sowie I_{ER} (rechte Seite) erfasst.

Ein Empfänger der Empfangseinheit 18, zu der der Hot Spot X₀ den geringeren Abstand aufweist, detektiert eine höhere Intensität I_{EL} des Lichts L. Aufgrund dieses Unterschieds der Intensitäten I_{EL} sowie I_{ER} an den beiden Enden kann die Position des Hot Spots X₀ mathematisch oder auch durch Vergleich mit beispielsweise in einer Tabelle hinterlegten Kennwerten ermittelt werden. Hierbei wird insbesondere eine Zuordnung von Intensitätsverhältnissen zwischen I_{EL} und I_{ER} zu einer Position vorgenommen. Im Ausführungsbeispiel der Fig.4B ist die Intensität I_{EL} des eingekoppelten Lichts L am linken Empfänger höher als die Intensität I am rechten Empfänger I_{ER}. Insofern handelt es sich um einen Hot Spot, welcher am linken Rand der Sensorleitung 2 auftritt.

Das empfangene Licht L bzw. ein zur Intensität des empfangenen Lichts L korreliertes Empfangssignal wird an die Auswerteeinheit 20 zur Auswertung weitergeleitet, wo in Abhängigkeit der Intensität des Lichts die Ausgabe eines Signals S erfolgt.

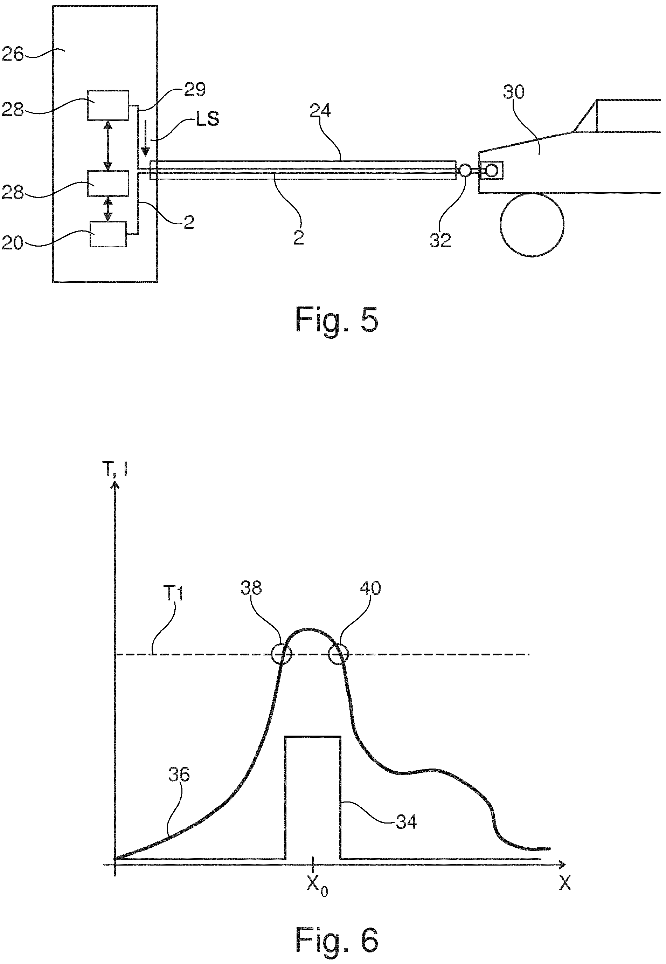

In Fig. 5 ist ein Ladesystem zum Laden eines Kraftfahrzeugs 30 grob vereinfacht dargestellt. Die Sensorleitung 2 ist dabei in ein Ladekabel 24 zur thermischen Überwachung des Ladekabels 24 integriert.

Das Ladesystem weist eine Ladesäule 26 mit einer Ladevorrichtung 28 zum Laden einer hier nicht näher dargestellten Batterie eines Kraftfahrzeugs 30 über das Ladekabel 24 mit einem Ladestrom LS auf. Das Ladekabel 24 weist hierzu endseitig einen Ladestecker 32 auf.

Der Laderstecker 32 weist vorzugsweise eine genormte Steckverbindung auf. Das an den Ladestecker 32 angebrachte Ladekabel 24 weist neben der den Ladestrom LS führenden Ladestromleitung 29 auch die Sensorleitung 2 auf. Vorzugsweise ist das Ladekabel derart realisiert, dass es eine parallele Anordnung von Ladestromleitung 29 und Sensorleitung 2 aufweist. Diese in Fig. 5 dargestellte Ausgestaltung des Ladekabels 24 hat den Vorteil, dass auch lokal auftretende Veränderungen einer Umgebungsvariablen einfach erfasst werden, da sich die Sensorleitung über die gesamte Länge der Ladestromleitung 29 erstreckt.

Die Sensorleitung 2 ist vorzugsweise zur Temperaturüberwachung des Ladekabels 24 eingesetzt. Die Auswerteeinheit 20 und die Steuerungsvorrichtung sind zu diesem Zweck beispielsweise in die Ladesäule 26 integriert, wie dies in Fig.5 dargestellt ist. Dies ermöglicht eine Regulierung des Ladestroms LS bei drohender Überhitzung des Ladekabels 24 durch den fließenden Ladestrom LS. Hierzu sind die Auswerteeinheit 20, die Steuerungsvorrichtung 28 und die Ladevorrichtung 28 derart miteinander verschaltet, dass das von der Auswerteeinheit 20, in Abhängigkeit der Intensität des eingekoppelten Lichts L, ausgebende Signal S in der Steuerungsvorrichtung 28 erfasst wird. Anschließend erfolgt auf Grundlage des Signals S eine Reduzierungsregelung für den Ladestrom LS durch die Steuerungsvorrichtung 22. Dies hat zur Folge, dass in der Ladevorrichtung 28 der Ladestrom LS zum Laden der Batterie im Kraftfahrzeug 30 reduziert wird. Dieser reduzierte Ladestrom bleibt so lange geschaltet, bis die Temperaturbelastung innerhalb des Ladekabels 24 derart zurückgegangen ist, dass die temperaturbedingte Ausgabe des Signals S aufgrund von fehlender Einkopplung des Lichts L in den zweiten Lichtwellenleiter 4b der Sensorleitung 2 erlischt. Dies geschieht, sobald die Temperatur innerhalb des Ladekabels unterhalb der Umschlagstemperatur des Materials M liegt. Vorteilhafterweise ist die Temperaturüberwachung als Soll-Ist-Wert Regelung geschaltet. Regelgröße ist die Umschlagstemperatur des Materials M beziehungsweise das in den zweiten Lichtwellenleiter 4b eingekoppelte Licht.

Alternativ oder ergänzend weist die Steuerungsvorrichtung eine Regelung einer Kühlleistung auf, sofern es sich um die Überwachung von temperierten Kabeln handelt. Speziell wird ein konstanter Ladestrom LS eingestellt und die Kühlleistung entsprechend geregelt oder gesteuert. Über die Kühlleistung wird daher gewährleistet, dass das Kabel 2 eine vorgegebene Temperatur nicht überschreitet.

Eine grafische Erläuterung des in der Sensorleitung 2 genutzten Prinzips zur Erfassung der Änderung einer Umgebungsvariablen ist in Fig.6 vereinfacht dargestellt.

Im Schaubild ist ein Verlauf 34 der Intensität I des in den zweiten Lichtwellenleiter 4b eingekoppelten Lichts L, sowie ein Temperaturverlauf 36 innerhalb der Sensorleitung 2. Die Abszissenachse gibt die Länge X der Sensorleitung 2 an. Die Temperatur T beziehungsweise die Intensität I des eingekoppelten Lichts L sind gemeinsam auf der Ordinantenachse 40 aufgetragen. Weiterhin ist als gestrichelte Linie die Umschlagstemperatur T1 des Materials M eingezeichnet.

Wird der Temperaturverlauf 36 betrachtet, so ist bei Überschreiten der Umschlagstemperatur 38 an einem "Hot-Spot" X₀ der sprunghafte Anstieg der Lichtintensität I innerhalb des zweiten Lichtwellenleiters 4b zu erkennen. Dies hat zur Folge, dass, solange die Temperatur einen Wert oberhalb der Umschlagstemperatur T1 aufweist, Licht L in den zweiten Lichtwellenleiter eingekoppelt ist. Bei Unterschreiten der Umschlagstemperatur 40 erlischt die Einkopplung von Licht L in den zweiten Lichtwellenleiter 4b sprungartig.

Ergänzend ist durch den Verlauf 34 der Intensität I im zweiten Lichtwellenleiter 4b der binäre Charakter der Sensorleitung 2 erkennbar. Dieser "Charakter" hat den Vorteil, dass er eine einfache und zuverlässige Detektierung von Licht im zweiten Lichtwellenleiter 4b ermöglicht.

## Patentansprüche

1. Sensorleitung (2) zur Erfassung der Änderung einer Umgebungsvariablen mit einem äußeren Schutzmantel (12), in dem ein erster Lichtwellenleiter (4a) und ein zweiter Lichtwellenleiter (4b) sowie ein Material (M) mit einer Lichtdurchlässigkeit, die in Abhängigkeit des Werts der Umgebungsvariablen variiert, angeordnet sind, wobei das Material (M) derart zwischen dem ersten Lichtwellenleiter (4a) und dem zweiten Lichtwellenleiter (4b) positioniert ist, dass in Abhängigkeit des Werts der Umgebungsvariablen Licht (L) radial aus dem ersten Lichtwellenleiter (4a) in den zweiten Lichtwellenleiter (4b) einkoppelbar ist.

2. Sensorleitung (2) nach Anspruch 1, wobei das Material (M) derart ausgebildet ist, dass die Lichtdurchlässigkeit sich sprunghaft ändert.

3. Sensorleitung (2) nach Anspruch 1 oder 2, wobei das Material (M) derart ausgewählt ist, dass es temperaturabhängig seine Lichtdurchlässigkeit ändert.

4. Sensorleitung (2) nach Anspruch 3, wobei das Material (M) einen transparenten Kunststoff aufweist, in den thermochromatische Pigmente (P) eingebracht sind, wobei ein Anteil der thermochromatischen Pigmente (P) bezogen auf die Masse des Materials (M) bevorzugt einen Wert zwischen 1 Gew.- % und 10 Gew.-%, insbesondere einen Wert zwischen 2 Gew.-% und 6 Gew.-% und speziell einen Wert von 4 Gew.-% aufweist.

5. Sensorleitung (2) nach einem der vorhergehenden Ansprüche, wobei das Material (M) derart ausgewählt ist, dass es bei einer Umschlagstemperatur zwischen 40°C und 90°C seine Lichtdurchlässigkeit ändert.

6. Sensorleitung (2) nach einem der Ansprüche 1 bis 5, wobei der erste Lichtwellenleiter (4a) und der zweite Lichtwellenleiter (4b) von einer gemeinsamen Ummantelung (8) umschlossen sind, die reflektierend ausgebildet ist, wobei die gemeinsame Ummantelung (8) insbesondere durch eine Metallfolie gebildet ist.

7. Sensorleitung (2) nach einem der Ansprüche 1 bis 6, wobei zumindest der erste Lichtwellenleiter (4a) einen Mantel (6) aus dem Material (M) aufweist.

8. Sensorleitung (2) nach einem der Ansprüche 1 bis 6, wobei der erste Lichtwellenleiter (4a) und der zweite Lichtwellenleiter (4b) miteinander verdrillt sind und / oder wobei zumindest einer der beiden Lichtwellenleiter (4a, 4b) eine optische Faser (F) und ein Cladding (10) aufweist, wobei ein Teil der Faser (F) frei vom Cladding (10) ist, wobei das Material (M) an den Teil angrenzt, welcher frei vom Cladding (10) ist.

9. Sensorleitung (2) nach Anspruch 8, wobei der erste Lichtwellenleiter (4a) und der zweite Lichtwellenleiter (4b) in das Material (M) eingebettet sind.

10. Sensorleitung (2) nach einem der Ansprüche 1 bis 9, die in ein zu überwachendes Kabel integrierbar ist, wobei das Kabel insbesondere als Ladekabel (24) zum Laden eines Akkumulators eines elektrisch angetriebenen Fahrzeugs (30) ausgebildet ist.

11. Messanordnung (14) zur Erfassung einer Umgebungsvariablen
- mit einer Sensorleitung (2) nach einem der vorhergehenden Ansprüche, wobei die Sensorleitung (2) einen äußeren Schutzmantel (12) aufweist, in dem ein erster Lichtwellenleiter (4a) und ein zweiter Lichtwellenleiter (4b) sowie ein Material (M) mit einer Lichtdurchlässigkeit, die in Abhängigkeit des Werts einer Umgebungsvariablen variiert, angeordnet sind, wobei das Material (M) derart zwischen dem ersten Lichtwellenleiter (4a) und dem zweiten Lichtwellenleiter (4b) positioniert ist, so dass in Abhängigkeit des Werts der Umgebungsvariablen das Licht (L) aus dem ersten Lichtwellenleiter (4a) in den zweiten Lichtwellenleiter (4b) einkoppelbar ist,
- mit einer Einspeiseeinheit (16) zur Einspeisung von Licht (L) in den ersten Lichtwellenleiter (4a)
- mit zumindest einer Empfangseinheit (18) zum Empfang von Licht (L) aus dem zweiten Lichtwellenleiter (4b) und
- mit einer Auswerteeinheit (20), die zur Auswertung des von der Empfangseinheit (18) empfangenen Lichts (L) ausgebildet ist und in Abhängigkeit des empfangenen Werts ein Signal (S) ausgibt.

12. Messanordnung (14) nach Anspruch 11, wobei die Einspeiseeinheit (16) dazu ausgebildet ist, das Licht (L) beidendseitig in den ersten Lichtwellenleiter (4a) einzuspeisen und/oder wobei die die Empfangseinheit (18) zum beiderseitigen Empfang von Licht (L) aus dem zweiten Lichtwellenleiter (4b) ausgebildet ist.

13. Messanordnung (14) nach einem der Ansprüche 11 bis 12, die zur Lokalisierung der Position einer lokalen Störstelle, insbesondere eines Hot Spots ausgebildet ist und hierzu auf berechnete oder hinterlegte ortsabhängige Intensitätsverläufe für das eingespeiste Licht (L) und für das empfangene Licht (L) zurückgreift oder zur beiderseitigen Erfassung des empfangenen Lichts (L) ausgebildet ist und anhand der an den beiden Enden des zweiten Lichtwellenleiters (4b) empfangenen Intensität auf die Position der lokalen Störstelle zurückschließt.

14. Messanordnung (14) nach einem der Ansprüche 11 bis 13, wobei sie eine Steuerungsvorrichtung (22) aufweist, die derart ausgelegt ist, dass ein Ladestrom oder eine Kühlleistung in Abhängigkeit des Signals (S) gesteuert wird.

15. Verfahren zur Erfassung einer Umgebungsvariablen mit Hilfe einer Sensorleitung (2), wobei die Sensorleitung (2) einen äußeren Schutzmantel aufweist, in dem ein erster Lichtwellenleiter (4a) und ein zweiter Lichtwellenleiter (4b) sowie ein Material (M) mit einer Lichtdurchlässigkeit, die in Abhängigkeit des Werts einer Umgebungsvariablen variiert, angeordnet sind, wobei Licht (L) in den ersten Lichtwellenleiter (4a) eingespeist wird und bei Überschreiten eines vordefinierten Werts der Umgebungsvariablen das Material (M) seine Transparenz ändert und somit Licht (L) in den zweiten Lichtwellenleiter (4b) radial eingekoppelt wird, wobei die Intensität des eingekoppelten Lichts (L) empfangen und ausgewertet wird.

## Claims

1. Sensor line (2) for detecting the change in an environmental variable, with an outer protective sheath (12), in which a first optical waveguide (4a) and a second optical waveguide (4b) and a material (M) with a light transmissivity that varies in dependence on the value of the environmental variable are arranged, wherein the material (M) is positioned between the first optical waveguide (4a) and the second optical waveguide (4b) in such a way that light (L) can be coupled radially from the first optical waveguide (4a) into the second optical waveguide (4b) as a function of the value of the environmental variable.

2. Sensor line (2) according to claim 1, wherein the material (M) is designed in such a way that the light transmissivity changes abruptly.

3. Sensor line (2) according to claim 1 or 2, wherein the material (M) is selected in such a way that it changes its light transmissivity as a function of temperature.

4. Sensor line (2) according to claim 3, wherein the material (M) hs a transparent plastic, into which thermochromatic pigments (P) are incorporated, wherein a proportion of the thermochromatic pigments (P) relative to the mass of the material (M) preferably has a value between 1% by weight and 10% by weight, in particular a value between 2% by weight and 6% by weight and in particular a value of 4% by weight.

5. Sensor line (2) according to one of the preceding claims, wherein the material (M) is selected in such a way that it changes its light transmissivity at an transition temperature between 40°C and 90°C.

6. Sensor line (2) according to one of claims 1 to 5, wherein the first optical waveguide (4a) and the second optical waveguide (4b) are enclosed by a common sheathing (8), which is of reflective design, wherein the common sheathing (8) is formed in particular by a metal foil.

7. Sensor line (2) according to one of claims 1 to 6, wherein at least the first optical waveguide (4a) has a sheath (6) made of the material (M).

8. Sensor line (2) according one of claims 1 to 6, wherein the first optical fiber (4a) and the second optical fiber (4b) are twisted together and/or wherein at least one of the two optical fibers (4a, 4b) has an optical fiber (F) and a cladding (10), wherein a part of the fiber (F) is free of the cladding (10), wherein the material (M) adjoins the part, which is free of the cladding (10).

9. Sensor line (2) according to claim 8, wherein the first optical fiber (4a) and the second optical fiber (4b) are embedded in the material (M).

10. Sensor line (2) according to one of claims 1 to 9, which can be integrated into a cable to be monitored, wherein the cable is designed in particular as a charging cable (24) for charging an accumulator of an electrically driven vehicle (30).

11. Measuring arrangement (14) for the detection of an environmental variable
- with a sensor line (2) according to one of the preceding claims, the sensor line (2) having an outer protective sheath (12), in which a first optical waveguide (4a) and a second optical waveguide (4b) and a material (M) having a light transmissivity that varies as a function of the value of an environmental variable are arranged, wherein the material (M) is positioned between the first optical waveguide (4a) and the second optical waveguide (4b) in such a way that the light (L) from the first optical waveguide (4a) can be coupled into the second optical waveguide (4b) in dependence on the value of the environmental variable,
- with a feed unit (16) for feeding light (L) into the first optical waveguide (4a)
- with at least one receiving unit (18) for receiving light (L) from the second optical waveguide (4b) and
- with an evaluation unit (20), which is designed to evaluate the light (L) received by the receiving unit (18) and outputs a signal (S) as a function of the received value.

12. Measuring arrangement (14) according to claim 11, wherein the feed unit (16) is designed to feed the light (L) into the first optical waveguide (4a) on both ends and/or wherein the receive unit (18) is designed to receive light (L) from the second optical waveguide (4b) on both sides.

13. Measuring arrangement (14) according to one of claims 11 to 12, which is designed to localize the position of a local interference point, in particular a hot spot, and for this purpose uses calculated or stored location-dependent intensity curves for the fed light (L) and for the received light (L) or is designed to detect the received light (L) at both ends and uses the intensity received at the two ends of the second optical waveguide (4b) to infer the position of the local interference point.

14. A measuring arrangement (14) according to one of claims 11 to 13, wherein it has a control device (22) designed in such a way that a charging current or a cooling power is controlled in dependence on the signal (S).

15. Method for detecting an environmental variable by means of a sensor line (2), wherein the sensor line (2) has an outer protective sheath, in which a first optical waveguide (4a) and a second optical waveguide (4b) and a material (M) having a light transmissivity which varies as a function of the value of an environmental variable are arranged, wherein light (L) is fed into the first optical waveguide (4a) and, when a predefined value of the environmental variable is exceeded, the material (M) changes its transparency and thus light (L) is radially coupled into the second optical waveguide (4b), wherein the intensity of the coupled-in light (L) is received and evaluated.

## Revendications

1. Ligne de capteur (2) pour la détection du changement d'une variable ambiante avec une enveloppe de protection extérieure (12), dans laquelle sont disposés un premier guide d'ondes optiques (4a) et un deuxième guide d'ondes optiques (4b) ainsi qu'un matériau (M) dont la transmittance de lumière varie en fonction de la valeur de la variable ambiante, dans laquelle le matériau (M) est positionné entre le premier guide d'ondes optiques (4a) et le deuxième guide d'ondes optiques (4b) de telle sorte que la lumière (L) est transmise en fonction de la valeur de la variable ambiante, dans laquelle le matériau (M) est positionné entre le premier guide d'ondes optiques (4a) et le deuxième guide d'ondes optiques (4b) de telle sorte que la lumière (L) peut être couplée radialement du premier guide d'ondes optiques (4a) dans le deuxième guide d'ondes optiques (4b) en fonction de la valeur de la variable ambiante.

2. Ligne de capteur (2) selon la revendication 1, dans laquelle le matériau (M) est conçu de telle sorte que la transmittance de lumière change brusquement.

3. Ligne de capteur (2) selon la revendication 1 ou 2, dans laquelle le matériau (M) est choisi de telle sorte qu'il modifie sa transmittance de lumière en fonction de la température.

4. Ligne de capteur (2) selon la revendication 3, dans laquelle le matériau (M) comprend un plastique transparent, dans lequel sont incorporés des pigments thermochromatiques (P), dans laquelle une proportion des pigments thermochromatiques (P) par rapport à la masse du matériau (M) a de préférence une valeur comprise entre 1 % en poids et 10 % en poids, notamment une valeur comprise entre 2 % en poids et 6 % en poids et notamment une valeur de 4 % en poids.

5. Ligne de capteur (2) selon l'une des revendications précédentes, dans laquelle le matériau (M) est choisi de telle sorte qu'il modifie sa transmission lumineuse à une température ambiante comprise entre 40°C et 90°C.

6. Ligne de capteur (2) selon l'une des revendications 1 à 5, dans laquelle le premier guide d'ondes optiques (4a) et le deuxième guide d'ondes optiques (4b) sont entourés d'une gaine commune (8), qui est de configuration réfléchissante, dans laquelle la gaine commune (8) est formée notamment par une feuille métallique.

7. Ligne de capteur (2) selon l'une des revendications 1 à 6, dans laquelle au moins le premier guide d'ondes optiques (4a) comprend une gaine (6) constituée du matériau (M).

8. Ligne de capteur (2) selon l'une des revendications 1 à 6, dans laquelle le premier guide d'ondes optiques (4a) et le deuxième guide d'ondes optiques (4b) sont torsadées ensemble et/ou dans laquelle au moins une des deux ondes optiques (4a, 4b) comprend une fibre optique (F) et un gainage (10), dans laquelle une partie de la fibre (F) est exempte du gainage (10), dans laquelle le matériau (M) est adjacent à la partie, qui est exempte de la gaine (10).

9. Ligne de capteur (2) selon la revendication 8, dans laquelle le premier guide d'ondes optiques (4a) et le deuxième guide d'ondes optiques (4b) sont noyés dans le matériau (M).

10. Ligne de capteur (2) selon l'une des revendications 1 à 9, qui peut être intégrée dans un câble à surveiller, dans laquelle le câble est conçu en particulier comme un câble de charge (24) pour charger un accumulateur d'un véhicule à propulsion électrique (30).

11. Dispositif de mesure (14) pour la détection d'une variable ambiante
- avec une ligne de capteur (2) selon l'une des revendications précédentes, dans lequel la ligne de capteur (2) comprend une enveloppe de protection extérieure (12), dans laquelle sont disposés un premier guide d'ondes optiques (4a) et un deuxième guide d'ondes optiques (4b) et un matériau (M) avec une transmittance de lumière variant en fonction de la valeur d'une variable ambiante, dans lequel le matériau (M) est positionné entre le premier guide d'ondes optiques (4a) et le deuxième guide d'ondes optiques (4b) de sorte que la lumière (L) provenant du premier guide d'ondes optiques (4a) peut être couplée dans le deuxième guide d'ondes optiques (4b) en fonction de la valeur de la variable ambiante,
- avec une unité d'alimentation (16) pour alimenter de la lumière (L) dans le premier guide d'ondes optiques (4a),
- avec au moins une unité de réception (18) pour recevoir la lumière (L) du deuxième guide d'ondes optiques (4b) et
- avec une unité d'évaluation (20), qui est conçue pour évaluer la lumière (L) reçue par l'unité de réception (18) et émet un signal (S) en fonction de la valeur reçue.

12. Dispositif de mesure (14) selon la revendication 11, dans lequel l'unité d'alimentation (16) est conçue pour alimenter la lumière (L) dans le premier guide d'ondes optiques (4a) des deux extrémités et/ou dans lequel l'unité de réception (18) est conçue pour recevoir la lumière (L) du deuxième guide d'ondes optiques (4b) des deux côtés.

13. Dispositif de mesure (14) selon l'une des revendications 11 à 12, qui est conçu pour localiser la position d'un point d'interférence local, en particulier d'un point chaud, et utilise à cet effet des courbes d'intensité calculées ou mémorisées en fonction du lieu pour la lumière injectée (L) et pour la lumière reçue (L), ou qui est conçu pour détecter les deux extrémités de la lumière reçue (L) et déduit la position du point d'interférence local à partir de l'intensité reçue aux deux extrémités du deuxième guide d'ondes optiques (4b).

14. Dispositif de mesure (14) selon l'une des revendications 11 à 13, dans lequel il comprend un dispositif de commande (22) adapté pour commander un courant de charge ou une puissance de refroidissement en fonction du signal (S).

15. Procédé de détection d'une variable d'environnement au moyen d'une ligne de capteur (2), dans lequel la ligne de capteur (2) comprend une enveloppe de protection extérieure, dans laquelle sont disposés un premier guide d'ondes optiques (4a) et un deuxième guide d'ondes optiques (4b) ainsi qu'un matériau (M) dont la transmittance de lumière varie en fonction de la valeur d'une variable d'environnement, dans lequel de la lumière (L) est alimentée dans le premier guide d'ondes optiques (4a) et, en cas de dépassement d'une valeur prédéfinie de la variable ambiante, le matériau (M) change de transparence et la lumière (L) est ainsi couplée radialement dans le deuxième guide d'ondes optiques (4b), dans lequel l'intensité de la lumière couplée (L) est reçue et évaluée.
